# EUROPEAN PATENT APPLICATION

(11) **EP 4 556 363 A1**
(43) Date of publication of application: **21.05.2025**
(21) Application number: 23210736.7
(22) Date of filing: 17.11.2023
(51) Int. Cl.: B64C 1/20, B64D 9/00

(54) **CARGO FLOOR ASSEMBLY FOR THE CARGO HOLD OF AN AIRCRAFT**

(71) Applicant: Airbus Operations GmbH, 21129 Hamburg (DE)
(72) Inventor: Fischer, Dennis, 21129 Hamburg (DE)
(74) Representative: Bird & Bird LLP - Hamburg

(57) **Abstract**

The present invention relates to a cargo floor assembly for the cargo hold of an aircraft (1) comprising a plurality of planar floor elements (7) arranged in at least two parallel rows in a common plane so as to form the floor of the cargo hold extending in the common plane, at least one main drive rail (9) extending between the at least two rows, wherein the at least one main drive rail (9) is adapted to fixedly support cargo handling members wherein the main drive rail (9) comprises first and second engagement flanges (19, 21) extending perpendicularly to the common plane and running parallel to and spaced from each other along the main drive rail (9) a connecting portion (23) interconnecting the engagement flanges (19, 21)and extending along the main drive rail (9), and first and second support flanges (25, 27), the first support flange (25) extending laterally outwardly away from the first engagement flange (19) and the intermediate space between the first and second engagement flanges (19, 21) and the second support flange (27) extending laterally outwardly away from the second engagement flange (21) and the intermediate space between the first and second engagement flanges (19, 21), wherein planar floor elements (7) are supported on the support flanges (25, 27) and wherein the engagement flanges (19, 21) comprise first engagement elements adapted to engage with second engagement elements of a cargo handling member arranged between the engagement flanges (19, 21).

## Description

The present invention relates to a cargo floor assembly for the cargo hold of an aircraft comprising a plurality of planar floor elements arranged in at least two parallel rows in a common plane so as to form the floor of the cargo hold extending in the common plane, at least one main drive rail extending between the at least two rows, wherein the at least one main drive rail is adapted to fixedly support cargo handling members such as a power drive unit adapted for moving cargo unit load devices over the cargo floor along the main drive rail, a latch member adapted to engage with cargo unit load devices to prevent the cargo unit load devices from moving along the main drive rail and perpendicular to the common plane, and/or a roller assembly unit adapted to facilitate movement of cargo unit load devices along the main drive rail,
Cargo floor assemblies are known from the prior art. For example, WO 2020/141 397 A2 discloses a cargo floor assembly in the cargo hold of an aircraft having a longitudinally arranged main drive rail which is adapted to support cargo handling members such as power drive units, latch members and/or roller assembly units. Further, the main drive rail is arranged between longitudinally extending rows of planar floor elements the upper surface of which extending in a common plane. However, this prior art main drive rail has a complicated design and projects beyond the plane of the cargo of the floor. Further, the coupling members which are adapted to engage with that cargo handling members have a complex design.

Therefore, it is the object of the present invention to provide a cargo floor assembly having a main drive rail with a less complex design and being capable of fixedly supporting cargo handling members in a flexible manner, i.e., allow for coupling the cargo handling members at different positions to the main drive rail.

This object is achieved with a cargo floor assembly as specified in claim 1.

Such cargo floor assembly for the cargo hold of an aircraft comprises a plurality of planar floor elements arranged in at least two parallel rows in a common plane so as to form the floor of the cargo hold extending in the common plane. Further, the floor assembly comprises at least one main drive rail extending between the at least two rows, wherein the at least one main drive rail is adapted to fixedly support cargo handling members such as a power drive unit adapted for moving cargo unit load devices over the cargo floor along the main drive rail, a latch member adapted to engage with cargo unit load devices to prevent the cargo unit load devices from moving along the main drive rail and perpendicular to the common plane, and/or a roller assembly unit adapted to facilitate movement of cargo unit load devices along the main drive rail.

The main drive rail comprises first and second engagement flanges extending perpendicularly to the common plane and running parallel to and spaced from each other along the main drive rail and a connecting portion interconnecting the engagement flanges and extending along the main drive rail.

The main guide rail further comprises first and second support flanges, with the first support flange extending laterally outwardly away from the first engagement flange and the intermediate space between the first and second engagement flanges and the second support flange extending laterally outwardly away from the second engagement flange and the intermediate space between the first and second engagement flanges. The planar floor elements are supported on the support flanges.

Finally, the engagement flanges comprise first engagement elements adapted to engage with second engagement elements of a cargo handling member arranged between the engagement flanges.

Hence, the cargo floor assembly of the present invention for the cargo hold of an aircraft comprises a plurality of planar floor elements arranged in at least two parallel rows in a common plane so as to form the floor of the cargo hold extending in the common plane. In particular, the floor elements may be configured and arranged such that their upper surfaces are positioned in a common plane, and this general configuration allows for unit load devices such as cargo containers to be slid or rolled over the top surface of the floor elements.

Furthermore, the cargo floor assembly of the present invention comprise at least one main drive rail which extends between the at least two rows, and the at least one main drive rail is adapted to fixedly support cargo handling members such as a power drive unit adapted for moving cargo unit load devices over the cargo floor along the main drive rail, a latch member adapted to engage with cargo unit load devices to prevent the cargo unit load devices from moving along the main drive rail and perpendicular to the common plane, and/or a roller assembly unit adapted to facilitate movement of cargo unit load devices along the main drive rail. Thus, the main drive rail is configured so that especially the afore-mentioned different types of cargo handling members may be fixedly connected to the main drive rail such that the handling members may not move in the x- y- and z-direction relative to the fuselage in which the floor assembly is mounted.

Moreover, according to the present invention the main drive rail comprises first and second engagement flanges extending perpendicularly to the common plane and running parallel to and spaced from each other along the main drive rail, and the engagement flanges comprise first engagement elements adapted to engage with second engagement elements of a cargo handling member arranged between the engagement flanges. Rather than providing separate engagement members in the intermediate section of the main drive rail, according to the present invention the perpendicularly extending engagement flanges comprise the first engagement means, preferably in the form of openings pointing to the opposite engagement flange and the intermediate space between the engagement flanges.

Therefore, the intermediate space between the engagement flanges is free of additional elements which could provide an obstacle when moving unit load devices along the main drive rail. In case, the first engagement means are in the form of openings, the entire configuration of the main drive rail remains relatively simple and easy to manufacture. Moreover, openings provide for a stable connection to the cargo handling members and may simply be provided in the engagement flanges. In particular, is not required that additional elements are affixed to the main drive rail and in particular to the engagement flanges.

Finally, the main drive rail of the present invention comprises first and second support flanges, which extend laterally outwardly away from the engagement flanges and the intermediate space between the first and second engagement flanges, and the planar floor elements are supported on the support flanges. Thus, the main drive rail also provides vertical support for the floor elements.

In summary, the main drive rail of the present invention may simply be manufactured and also mounted in a cargo floor arrangement. Furthermore, the entire cargo floor arrangement facilitates mounting of cargo handling members without having to provide complex mounting structures.

In a further preferred embodiment the main drive rail comprises first and second lower flanges extending downwardly from, and preferably perpendicularly to, the common plane and running parallel to and spaced from each other along the main drive rail. The lower flanges delimit a space below the connecting portion so that electrical cables may been received in this space. These cables may be connected to cargo handling members or other systems so that it is possible to guide cable below the cargo floor rather than in the space above. In addition, the lower flanges further stabilize the entire main drive rail so that its rigidity is further improved.

It is further preferred that the openings in the engagement flanges are arranged such that at least two openings in each engagement flange are engaged by bolt members of a single cargo handling member. In such arrangement each cargo handling member is supported in the main drive rail by two bolt members on each side engaging with openings in the main drive rail which provides for a coupling between the cargo handling member and the main drive rail which allows to transfer even large forces from the cargo handling members to indent the main drive rail and hence into the overall structure of the fuselage.

In another preferred embodiment the floor cargo assembly further comprises a plurality of cargo handling members of a first type and a plurality of cargo handling members of a second type wherein two bolt members of the cargo handling members of the first type are arranged to engage with the first engagement flange and have a first distance from each other and two bolt members of the cargo handling members of the first type are arranged to engage with the second engagement flange and have a second distance from each other. Further, two bolt members of the cargo handling members of the second type are arranged to engage with the first engagement flange and have a third distance from each other, and two bolt members of the cargo handling members of the second type are arranged to engage with the second engagement flange and have a fourth distance from each other. The first and the third distance differ from each other and the second and the fourth distance differ from each other, wherein the first engagement flange comprises a plurality of first pairs of openings being arranged with the first distance and a plurality of second pairs of openings being arranged with the third distance and wherein the second engagement flange comprises a plurality of first pairs of openings being arranged with the second distance and a plurality of second pairs of openings being arranged with the fourth distance.

In this preferred embodiment the cargo floor assembly comprises additionally two types of cargo handling members which differ in that the laterally movable bolt members adapted to be received within the openings in the first and second engagement flanges have different distances so that simply by providing pairs of openings with corresponding distances in the engagement flanges the positions can be defined where cargo handling members of the first type and of the second type may be arranged.

In another preferred embodiment, the cargo floor assembly comprises a plurality of power drive units adapted for moving cargo unit load devices over the cargo floor along the main drive rail, a plurality of latch members adapted to engage with cargo unit load devices to prevent the cargo unit load devices from moving along the main drive rail and perpendicularly to the common plane, and a plurality of roller assembly units adapted to facilitate movement of cargo unit load devices along the main drive rail. Further, each power drive unit comprises two bolt members arranged to engage with the first engagement flange and having a first distance from each other and two bolt members arranged to engage with the second engagement flange and having a second distance from each other. Each latch member comprises two bolt members arranged to engage with the first engagement flange and having a third distance from each other and two bolt members arranged to engage with the second engagement flange and having a fourth distance from each other. Each roller assembly unit comprises two bolt members arranged to engage with the first engagement flange and having a fifth distance from each other and two bolt members arranged to engage with the second engagement flange and having a sixth distance from each other, wherein the first, third and fifth distances are mutually different and the second, fourth and sixth distances are mutually different. Finally, the first engagement flange comprises a plurality of first pairs of openings being arranged with the first distance, a plurality of second pairs of openings being arranged with the third distance, and a plurality of third pairs of openings being arranged with the fifth distance, and the second engagement flange comprises a plurality of first pairs of openings being arranged with the second distance, a plurality of second pairs of openings being arranged with the fourth distance, and a plurality of third pairs of openings being arranged with the sixth distance.

In this preferred embodiment, three types of cargo handling members are provided in the cargo floor assembly, namely power drive units, latch members and roller assembly units, each of which have two bolt members on either side adapted to engage with the first and the second engagement flanges wherein the bolt members of the different types have different distances so that the positions where the specific types of cargo handling members may be positioned along the main drive rail can easily be determined by providing pairs of openings with the respective distance in the engagement flanges at the desired positions, and it will not be possible that a cargo handling member of a certain type may be positioned at a location which is not suitable for this type.

In another preferred embodiment the connecting portion is planar and extends parallel to the common plane between the first and second engagement flanges. Such configuration provides for a simple design having a high rigidity. Here, it is further preferred that the connecting portion extends in a plane below a plane defined by upper surface of the floor elements. In this case a gap between the engagement flanges is provided that allows for receiving portions of the cargo handling members.

Moreover, it is preferred that openings in the connecting portion are provided. In these openings further parts of cargo handling members may been received and in case at the position of a certain opening no cargo handling member shall be positioned that opening may be closed by a plug.

In another preferred embodiment, a plurality of cargo handling members is provided and each of the cargo handling members comprises at least two first bolt members laterally movably supported on the cargo handling member so that the first bolt members are laterally movable between an unlocked position and a locking position and capable of engaging with openings in the first engagement flange, wherein in the locking position the distal end of the first bolt members have a larger distance from a longitudinal center plane of the cargo handling member than in the unlocked position. Further, the cargo assembly comprises at least two second bolt members laterally movably supported on the cargo handling member so that the second bolt members are laterally movable between an unlocked position and a locking position and capable of engaging with openings in the second engagement flange, wherein in the locking position the distal end of the second bolt members have a larger distance from the longitudinal center plane of the cargo handling member than in the unlocked position. By providing laterally movable bolt members on under cargo handling members locking of the letter and can achieved in that simple manner. It is merely required to move the boat from the retracted unlocked position to the extended locking position when the cargo handling member is properly aligned with the respective openings in the engagement flanges.

Here, it is further preferred when the first and second bolt members are coupled to an actuating member such that actuation of the actuation member effects movement of each of the first and second bolt members between the locking position and the unlocked position. In such case each of them movable bolt members of a cargo handling member may be moved by actuating the soul actuation member of that handling member. This further facilitates assembly and disassembly of the cargo handling members on the main drive rail.

It is further preferred when the first and second bolt members comprise rack portions extending away from the proximal end of the bolt member, wherein the first and second bolt members are arranged in pairs and that for each pair a pinion is provided with which the rack portions of the first and second bolt members of the pair mesh, and wherein the pinions of a cargo handling member are coupled to the actuating member for being commonly rotated upon actuation of the actuating member. Such design has proven to be effective and may simply be installed on cargo handling members.

In a further aspect of the present invention a fuselage is provided having a cargo hold comprising a cargo floor assembly of one of the above embodiments.

In the following, the invention will further be described with regard to the exemplary embodiment shown in the drawings, wherein
- Figure 1: shows a side view of an aircraft having a cargo hold comprising an embodiment of a cargo floor assembly according to the present invention;
- Figure 2: shows a top view of the embodiment of a cargo floor of the present invention;
- Figure 3: shows a perspective view of the main drive rail of the embodiment of Figure 2;
- Figure 4: shows a partial sectional view of the main drive rail of Figure 3 supporting cargo handling members of different types;
- Figure 5: shows (a) a side view and (b) a transverse cross sectional view of a power drive unit of the embodiment of a cargo floor assembly;
- Figure 6: shows (a) a side view and (b) a transverse cross sectional view of a roller assembly unit of the embodiment of a cargo floor assembly; and
- Figure 7: shows a cross sectional view of a cargo handling member of the embodiment of a cargo floor assembly

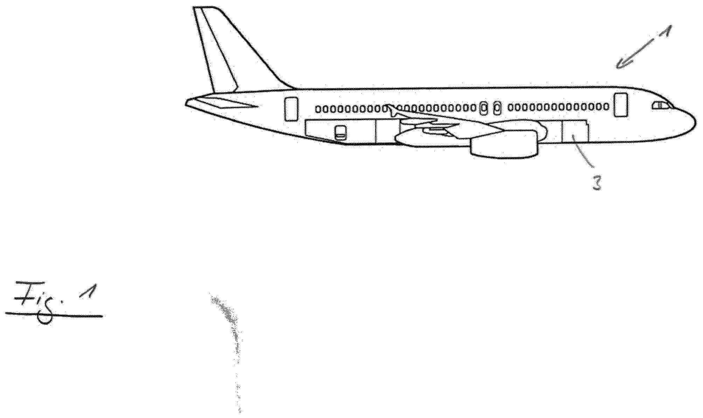

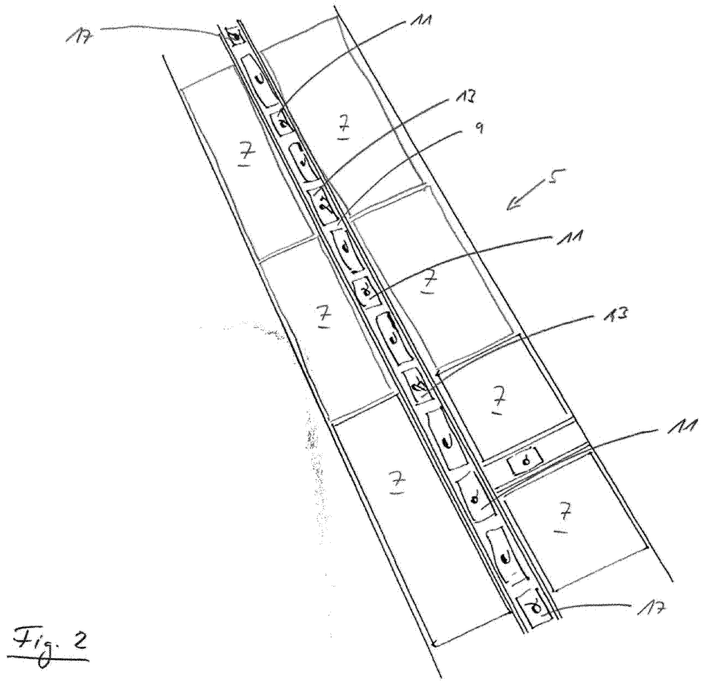

In Figure 1 an aircraft 1 is shown having a cargo hold in the fuselage which is accessible via cargo doors 3. The cargo hold of the aircraft 1 is provided with an embodiment of a cargo floor assembly 5 of the present invention and, as can be taken from Figure 2, comprises a plurality of planar floor elements 7 which in this embodiment are arranged in two rows extending in parallel along the longitudinal axis of the fuselage. The planar floor elements 7 are arranged in the fuselage of the aircraft 1 in such a manner that they extend also in a common plane so as to form the floor of the cargo hold in the common plane. In particular, in the present embodiment the floor elements 7 are mounted such that their upper surfaces are arranged in the common plane and therefore define the latter.

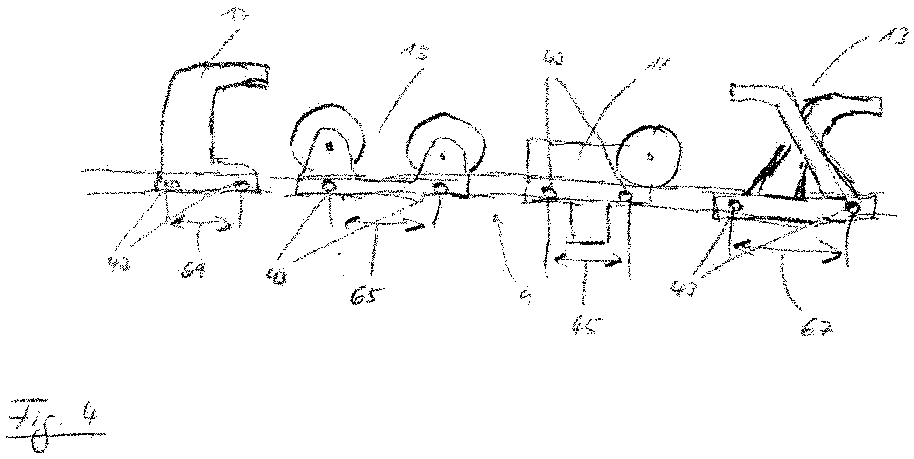

As can further be seen in Figure 2 a main drive rail 9 extends between the two rows of the floor elements 7 parallel to the longitudinal axis of the fuselage along the cargo hold. As will be described in the following the main drive rail 9 is adapted to fixedly support cargo handling members such as power drive units 11 adapted for moving cargo unit load devices such as containers (not shown) over the cargo floor and along the main drive rail 9, latch members 13 adapted to engage with cargo unit load devices to prevent the cargo unit load devices from moving along the main drive rail 9 and perpendicular to the common plane, roller assembly units 15 adapted to facilitate movement of cargo unit load devices along the main drive rail 9, and end stops 17 which prevent cargo unit load devices from sliding further along the main drive rail 9 (see Figures 2 and 4).

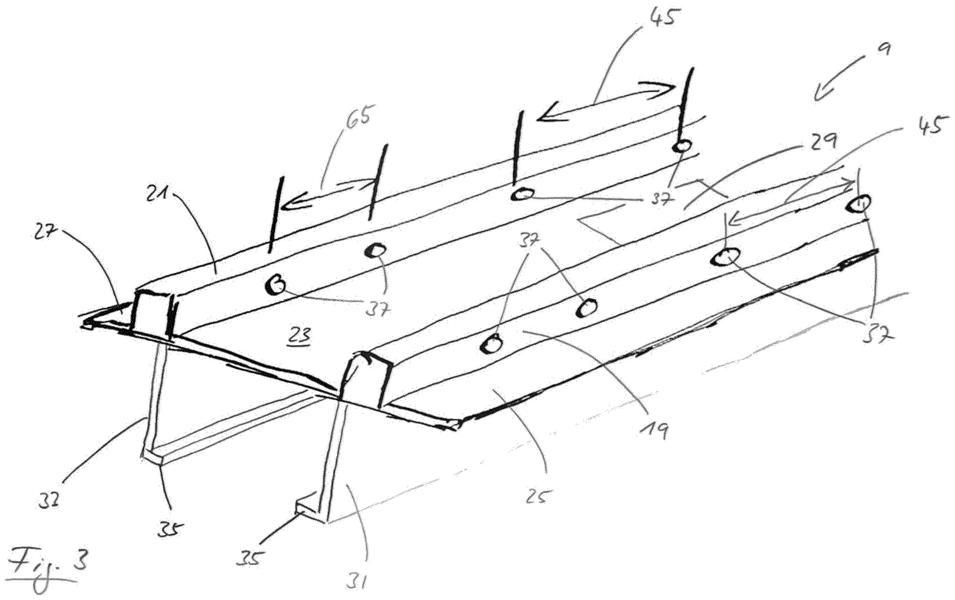

As can be seen in Figure 3 the main drive rail 9 comprises first and second engagement flanges 19, 21 extending perpendicularly to the common plane and, hence, to the surfaces of the floor elements 7. Further, the engagement flanges 19, 21 run in parallel to each other and are spaced from each other along the main drive rail 9.

Further, the main drive rail 9 comprises a connecting portion 23 which is arranged between the first and second engagement flange 19, 21 and interconnects the engagement flanges 19, 21. The connecting portion extends along the main drive rail 9. It is planar in shape and extends parallel to the common plane but is vertically offset to that plane and the surfaces of floor elements 7 so that it extends in a plane below the plane defined by upper surfaces of the floor elements 7. Thus, a recess is provided between the engagement flanges 19, 21 and the connecting portion 23 in which portions of the above-mentioned cargo handling members may be received.

Furthermore, openings 29 are provided in the connecting portion 23 so as to allow cables to be guided e.g. to a power drive unit 11 which is mechanically coupled to the main drive rail 9 in a manner which will be discussed in detail below. Hence, the openings 29 enable that the cargo handling members may further be connected to the hydraulic and electrical systems of the aircraft.

As can further be taken from Figure 3, the main guide rail 9 of the floor assembly of the present invention comprises first and second support flanges 25, 27. The first support flange 25 extends laterally outwardly away from the first engagement flange 19 and the intermediate space between the first and second engagement flanges 19, 21. Moreover, the upper surface of the first support flange 25 extends parallel but vertically offset to the plane defined by the upper surface of the floor elements 7. Similarly, the second support flange 27 extends laterally outwardly away from the second engagement flange 21 and the intermediate space between the first and second engagement flanges 19, 21. As in case of the first support flange 25, the upper surface of the second support flange 27 extends parallel but vertically offset to the plane defined by the upper surface of the floor elements 7. The vertical position of the support flanges 25, 27 facilitates that the planar floor elements 7 are supported on the support flanges 25, 27, so that the main drive rail 9 has also the function of absorbing loads introduced into the floor elements 7 and further introduce them into the fuselage structure.

Finally, the main drive rail 9 comprises first and second lower flanges 31, 33 extending downwardly from the connecting portion 23 and are arranged laterally at essentially the same position as the engagement flanges 19, 21. Further, in this preferred embodiment the lower flanges 31, 33 extend perpendicularly to the connecting portion 23 and, hence, the common plane, and are running parallel to and spaced from each other along the main drive rail 9. In addition, the distal ends of the lower flanges 31, 33 are provided with projections 35 pointing inwardly and towards each other.

To facilitate fixed coupling of the cargo handling members, i.e., the power drive units 11, the latch members 13, the roller assembly units 15 and the end stops 17, to the main drive rail 9, the engagement flanges 19, 21 comprise first engagement elements adapted to engage with second engagement elements the cargo handling members. In this preferred embodiment the engagement elements are formed as openings 37 pointing towards the opposite engagement flange 19, 21 and being adapted to receive bolt members forming second engagement members and being laterally movably supported in the cargo handling members. In this embodiment the openings 37 are in the form of through openings but it also conceivable that the openings are in the form of blind holes extending from the inwardly pointing surfaces of the engagement flanges 19, 21. As also indicated in Figure 3, the openings 37 are arranged in pairs such that two openings 37 in each engagement flange 19, 21 may be engaged by bolt members of a single cargo handling member.

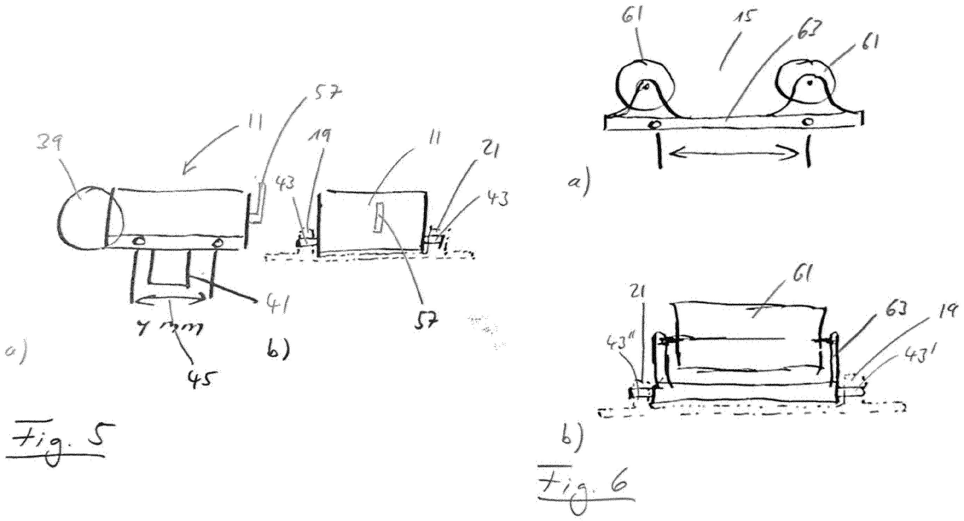

As can be seen in Figure 2, a plurality of power drive units 11 are coupled to main drive rail 9 which are adapted for moving cargo unit load devices over the cargo floor along the main drive rail 9. The power drive units 11 comprise a driven wheel 39 which may frictionally or meshingly engage with the unit load device (not shown) so as to propel the latter. Further, the power drive unit comprises a lower coupling member 41 which may project into one of the openings 29 in the connecting portion 23 so as to be connected to supply cables guided in the space between the lower flanges 31, 33. Furthermore, each power drive unit 11 comprises two laterally movable bolt members 43 which are adapted to engage with the first engagement flange 19 and two bolt members arranged to engage with the second engagement flange 21 (see Figure 5). In this embodiment both pairs of bolt members 43 on either side of the power drive units 11 have the same first distance 45 from each other. However, it is also conceivable that the distances the bolt members 43 on both sides of the power drive units 11 have, differ from each other. In order to define the positions, where power drive units 11 may be attached to the main drive rail 9 the engagement flanges 19, 21 comprise first pairs of openings 37 being positioned in the flanges 19, 21 with the first distance 45.

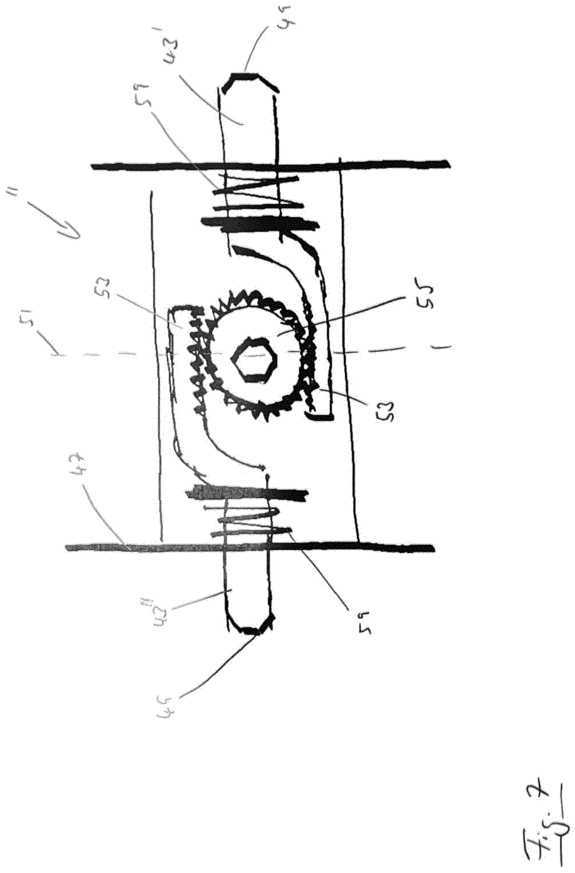

As can also be taken from Figure 7 the power drive unit 11 comprises first bolt members 43' laterally movably supported in the housing 47 of the power drive unit 11 so that the first bolt members 43' are laterally movable between an unlocked position and a locking position (shown in Figure 7). When the first bolt members 43' are in the locking position they may engage with the openings 37 in the first engagement flange 19. In particular, when being in the locking position the distal ends 49 of the first bolt members 43' have a larger distance from a longitudinal center plane 51 of the housing 47 of the power drive unit 11 than in the unlocked position. Further, the power drive unit 11 comprises two second bolt members 43" also laterally movably supported in the housing 47 of the power drive unit 11 so that the second bolt members 43" are also laterally movable between an unlocked position and a locking position (shown in Figure 7). In the locking position the distal end 49 of the second bolt members 43" have a larger distance from the longitudinal center plane 51 than in the unlocked position and when being in the locking position the second bolt members 43" may engage with opening 37 in the second engagement flange 21.

As can further be seen in Figure 7, the first and second bolt members 43', 43" comprise rack portions 53 extending away from the proximal end of the bolt members 43', 43", and the first and second bolt members 43', 43" are arranged in pairs and for each pair a pinion 55 is provided with which the rack portions 53 of the first and second bolt members 43' 43" of the pair mesh. The power drive unit 11 comprises two pinions 55 the first one meshingly engaging with the rack portions 53 of the first pair of first and second bolt members 43', 43" and the second one meshingly engaging with the rack portions 53 of the second pair of first and second bolt members 43', 43". Both pinions 55 are coupled to a sole actuating member 57 wherein pivotal movement of the actuating member 57 results in rotation of the pinions 55 which in turn effects movement of the first and second bolt members 43', 43" from the unlocked position to the locking position. Furthermore, as can also be seen in Figure 7, biasing members in the form of springs 59 are provided which push the first and second bolt members 43', 43" towards the retracted unlocked position. Hence, in order to move the first and second bolt members 43', 43" from the unlocked position to the locking position the biasing force of the biasing members, i.e., of the springs 59, must be overcome and in order to keep the bolt members 43', 43" in the locking position, the actuating member 57 must be locked in the respective position.

Thus, in order to install a power drive unit 11 in the main drive rail 9, the power drive unit is positioned in the main drive rail 9 in such a manner that its bolt members 43', 43" are aligned with openings 37 having the first distance 45. Then, the actuating member 57 is actuated so that the first and second bolt members 43', 43" are moved to the extended locking position in which they project into the openings 37 and engage with the latter. Then, the power drive unit 11 is fixedly mounted on the main drive rail 9. In order to release the power drive unit 11, it is only required to unlock the actuating member 57 so that the springs 59 return the bolt members 43', 43" to the unlocked retracted position and disengage from the openings 37.

Moreover, the floor assembly 5 of the present invention further comprises a plurality of roller assembly units 15 adapted to facilitate movement of cargo unit load devices along the main drive rail 9 (see Figure 6). To this end the roller assembly units 15 comprise roller members 61 rotatably supported on the housing 63 of the roller assembly units 15. Further, each roller assembly unit 15 comprises two bolt members 43'arranged to engage with the first engagement flange 19 and having a second distance from each other and two bolt members 43" arranged to engage with the second engagement flange 21 having also the second distance from each other. In the housing 63 of the roller assembly units 15 the same mechanism is provided comprising rack portions and pinions coupled to a common actuating member as described in relation to the power drive units. As the second distance 65 differs from the first distance 45, the roller assembly units 15 may only be coupled to the first and second engagement flanges 19, 21 at positions where two adjacent openings 37 have the second distance from each other (see Figure 3).

Similarly, the floor assembly comprises a plurality of latch members 13 adapted to engage with cargo unit load devices to prevent the cargo unit load devices from moving along the main drive rail 9 and perpendicularly to the common plane. Each of the latch members 13 comprises two bolt members 43' arranged to engage with the first engagement flange 19 and two bolt members 43" arranged to engage with the second engagement flange 21. The first and second bolt members 43', 43" of the latch members 13 have a third distance 67 from each other and the latch members 13 are provided with a rack-pinion-actuation mechanism as it is the case for the power drive units 15. Since the third distance 67 differs from the first and second distances 45, 65, the latch members 13 may only be coupled to the first and second engagement flanges 19, 21 at positions where two adjacent openings 37 have the third distance 67 from each other (see Figure 4).

Finally, the floor assembly comprises a plurality of end stops 17 which prevent cargo unit load devices from sliding further along the main drive rail 9. Each of the end stops 17 comprises two bolt members 43' arranged to engage with the first engagement flange 19 and two bolt members 43" arranged to engage with the second engagement flange 21. The first and second bolt members 43', 43" of the end stops 17 have a fourth distance 69 from each other and the end stops 17 are provided with a rack-pinion-actuation mechanism as it is the case for the power drive units 15. Since the fourth distance 69 differs from the first, second and third distances 45, 65, 67 the end stops 17 may only be coupled to the first and second engagement flanges 19, 21 at positions where two adjacent openings 37 have the fourth distance 67 from each other (see Figure 4).

Hence, with the floor assembly 5 of the afore-mentioned embodiment for different types of cargo handling members the respective positions along the main drive rail 9 may easily be defined with the risk that a cargo handling member may be mounted at the wrong position. Further the entire floor assembly 5 has a relatively simple configuration and is therefore simple to manufacture and to install in the cargo hold of an aircraft.

### Reference numerals:

- 1: aircraft
- 3: cargo door
- 5: cargo floor assembly
- 7: floor elements
- 9: main drive rail
- 11: power drive unit
- 13: latch member
- 15: roller assembly unit
- 17: end stop
- 19: first engagement flange
- 21: second engagement flange
- 23: connecting portion
- 25: first support flange
- 27: second support flange
- 29: opening
- 31: first lower flange
- 33: second lower flange
- 35: projection
- 37: opening
- 39: driven wheel
- 41: coupling member
- 43: bolt member
- 45: first distance
- 47: housing
- 49: distal end (bolt members)
- 51: longitudinal center plane
- 53: rack portion
- 55: pinion
- 57: actuating member
- 59: spring
- 61: roller member
- 63: housing
- 65: second distance
- 67: third distance
- 69: fourth distance

## Claims

1. A cargo floor assembly for the cargo hold of an aircraft (1) comprising a plurality of planar floor elements (7) arranged in at least two parallel rows in a common plane so as to form the floor of the cargo hold extending in the common plane,
at least one main drive rail (9) extending between the at least two rows,
wherein the at least one main drive rail (9) is adapted to fixedly support cargo handling members such as
- a power drive unit (11) adapted for moving cargo unit load devices over the cargo floor along the main drive rail (9),
- a latch member (13) adapted to engage with cargo unit load devices to prevent the cargo unit load devices from moving along the main drive rail (9) and perpendicular to the common plane, and/or
- a roller assembly unit (15) adapted to facilitate movement of cargo unit load devices along the main drive rail (9),
**characterized in that**
the main drive rail (9) comprises first and second engagement flanges (19, 21) extending perpendicularly to the common plane and running parallel to and spaced from each other along the main drive rail (9)
a connecting portion (23) interconnecting the engagement flanges (19, 21) and extending along the main drive rail (9), and
first and second support flanges (25, 27), the first support flange (25) extending laterally outwardly away from the first engagement flange (19) and the intermediate space between the first and second engagement flanges (19, 21) and the second support flange (27) extending laterally outwardly away from the second engagement flange (21) and the intermediate space between the first and second engagement flanges (19, 21),
wherein the planar floor elements (7) are supported on the support flanges (25, 27) and
wherein the engagement flanges (19, 21) comprise first engagement elements adapted to engage with second engagement elements of a cargo handling member arranged between the engagement flanges (19, 21).

2. The cargo floor assembly according to claim 1, comprising first and second lower flanges (31, 33) extending downwardly from, and preferably perpendicularly to, the common plane and running parallel to and spaced from each other along the main drive rail (9).

3. The cargo floor assembly according to claim 1 or 2, wherein the first and the second engagement flange (19, 21) comprises openings (37) pointing towards the opposite engagement flange (19, 21) and being adapted to receive bolt members (43) laterally movably supported in cargo handling members.

4. The cargo floor assembly according to claim 3, wherein the openings are arranged such that at least two openings (37) in each engagement flange (19, 21) are engaged by bolt members (43) of a single cargo handling member.

5. The cargo floor assembly according to claim 4, further comprising a plurality of cargo handling members of a first type and a plurality of cargo handling members of a second type and
wherein two bolt members (43') of the cargo handling members of the first type are arranged to engage with the first engagement flange (19) and have a first distance (45) from each other,
wherein two bolt members (43") of the cargo handling members of the first type are arranged to engage with the second engagement flange (21) and have a second distance (45) from each other,
wherein two bolt members (43') of the cargo handling members of the second type are arranged to engage with the first engagement flange (19) and have a third distance (65) from each other,
wherein two bolt members (43") of the cargo handling members of the second type are arranged to engage with the second engagement flange (21) have a fourth distance (65) from each other,
wherein the first and the third distance (45, 65) differ from each other and the second and the fourth distance (45, 65) differ from each other,
wherein the first engagement flange (19) comprises a plurality of first pairs of openings (37) being arranged with the first distance (45) and a plurality of second pairs of openings (37) being arranged with the third distance (65), and
wherein the second engagement flange (21) comprises a plurality of first pairs of openings (37) being arranged with the second distance (45) and a plurality of second pairs of openings (37) being arranged with the fourth distance (65).

6. The cargo floor assembly according to claim 4, comprising
a plurality of power drive units (11) adapted for moving cargo unit load devices over the cargo floor along the main drive rail (9),
a plurality of latch members (13) adapted to engage with cargo unit load devices to prevent the cargo unit load devices from moving along the main drive rail (9) and perpendicularly to the common plane, and
a plurality of roller assembly units (15) adapted to facilitate movement of cargo unit load devices along the main drive rail (9),
wherein each power drive unit (11) comprises two bolt members (43') arranged to engage with the first engagement flange (19) and having a first distance (45) from each other and two bolt members (43") arranged to engage with the second engagement flange (21) and having a second distance (45) from each other,
wherein each latch member (13) comprises two bolt members (43') arranged to engage with the first engagement flange (19) and having a third distance (65) from each other and two bolt members (43") arranged to engage with the second engagement flange (21) and having a fourth distance (65) from each other,
wherein each roller assembly unit (15) comprises two bolt members (43') arranged to engage with the first engagement flange (19) and having a fifth distance (67) from each other and two bolt members (43") arranged to engage with the second engagement flange (21) and having a sixth distance (67) from each other,
wherein the first, third and fifth distances (45, 65, 67) are mutually different and the second, fourth and sixth distances (45, 65, 67) are mutually different.
wherein the first engagement flange (19) comprises a plurality of first pairs of openings (37) being arranged with the first distance (45), a plurality of second pairs of openings (37) being arranged with the third distance (65), and a plurality of third pairs of openings (37) being arranged with the fifth distance (67), and
wherein the second engagement flange (21) comprises a plurality of first pairs of openings (37) being arranged with the second distance (45), a plurality of second pairs of openings (37) being arranged with the fourth distance (65), and a plurality of third pairs of openings (37) being arranged with the sixth distance (67).

7. The cargo floor assembly according to any preceding claim, wherein the connecting portion (23) is planar and extends parallel to the common plane between the first and second engagement flanges (19, 21).

8. The cargo floor assembly according to claim 7, wherein the connecting portion (23) extends in a plane below a plane defined by upper surface of the floor elements (7).

9. The cargo floor assembly according to any preceding claim, wherein openings (29) in the connecting portion (23) are provided.

10. The cargo floor assembly according to any of claims 3 to 9, comprising a plurality of cargo handling members, each of the cargo handling members comprising at least two first bolt members (43') laterally movably supported on the cargo handling member so that the first bolt members (43') are laterally movable between an unlocked position and a locking position and capable of engaging with openings (37) in the first engagement flange (19),
wherein in the locking position the distal end (49) of the first bolt members (43') have a larger distance from a longitudinal center plane (51) of the cargo handling member than in the unlocked position,
wherein the cargo assembly comprises at least two second bolt members (43") laterally movable supported on the cargo handling member so that the second bolt members (43") are laterally movable between an unlocked position and a locking position and capable of engaging with openings (37) in the second engagement flange (21), and
wherein in the locking position the distal end of the second bolt members (43") have a larger distance from the longitudinal center plane (51) of the cargo handling member than in the unlocked position.

11. The cargo floor assembly according to claim 10, wherein the first and second bolt members (43', 43") are coupled to an actuating member (57) such that actuation of the actuation member (57) effects movement of each of the first and second bolts (43', 43") between the locking position and the unlocked position.

12. The cargo floor assembly according to claim 11, wherein the first and second bolt members (43', 43") comprise rack portions (53) extending away from the proximal end of the bolt member (43', 43"),
wherein the first and second bolt members (43', 43") are arranged in pairs and that for each pair a pinion (55) is provided with which the rack portions (53) of the first and second bolt members (43', 43") of the pair mesh, and
wherein the pinions (55) of a cargo handling member are coupled to the actuating member (57) for being commonly rotated upon actuation of the actuating member (57).

13. Aircraft comprising a fuselage having a cargo hold comprising a cargo floor assembly (5) according to any of the preceding claims with the at least two rows extending parallel to the longitudinal axis of the fuselage.
